# EUROPÄISCHE PATENTSCHRIFT

(11) **EP 0 564 904 B1**
(45) Veröffentlichungstag und Bekanntmachung des Hinweises auf die Patenterteilung: **09.10.1996**
(21) Anmeldenummer: 93104843.3
(22) Anmeldetag: 24.03.1993
(51) Int. Cl.: H01R 4/72, H01R 9/05, H02G 15/18, H01R 9/03

(54) **Abzweigmuffe für Niederspannungskabel**
Junction sleeve for low voltage cable
Manchon de dérivation pour câble basse tension

(30) Priorität: 10.04.1992 DE 4212101
(43) Veröffentlichungstag der Anmeldung: 13.10.1993
(73) Patentinhaber: kabelmetal electro GmbH, D-30002 Hannover (DE)
(72) Erfinder: Grajewski, Franz, Dr.-Ing., W-3060 Stadthagen (DE)

(56) Entgegenhaltungen:
- EP-A- 0 068 780
- DE-A- 3 148 386
- FR-A- 2 511 178
- GB-A- 2 095 926
- LU-A- 59 327
- ELEKTRISCHE ENERGIETECHNIK Bd. 33, Nr. 6 , Dezember 1988 , HEIDELBERG (DE) Seiten 48 - 49 'Polyolefin contra Giessharz'

## Beschreibung

Die Erfindung betrifft eine Abzweigmuffe für Niederspannungskabel mit einer Abzweigklemme aus Metall, die aus zwei Klemmenhälften besteht, die z.B. mit Schraubbolzen zu der Abzweigklemme zusammenfügbar sind, wobei beim Zusammenfügen die Isolierung der Kabeladern von Kontaktkrallen durchdrungen wird, sowie einer die Abzweigklemme einhüllenden auf den Mantel des Kabels beiderseits der Abzweigklemme aufgeschrumpften Manschette aus Kunststoff.

Für die Abzweigung von mehradrigen Niederspannungskabeln ist es bekannt, auf das abgemantelte ungeschnittene Kabel zwei Metallklemmenhälften aufzusetzen und z.B. mittels Schraubbolzen zusammenzuführen. Dabei durchdringen im Innern der Klemmenhälften vorgesehene Kontaktkrallen die Isolierung der Kabeladern. Die Klemmenhälften besitzen an ihrer den Kontaktkrallen entgegengesetzten Seite eine Bohrung, durch welche das abisolierte Ende eines Abzweigkabels hindurchgeführt und mit einer Madenschraube festgelegt und dabei mit der entsprechenden Kontaktkralle elektrisch leitend verbunden wird. Es entsteht somit auf einfache Weise und ohne daß das Kabel außer Betrieb genommen werden muß, eine elektrisch leitende Verbindung zwischen der Kabelader und dem entsprechenden Abzweigkabel (DE-AS 1 790 060). Zum Schutz gegen äußere Einflüsse wird die Abzweigstelle von einer Umhüllung umgeben, in die ein Zweikomponenten-Gießharz in flüssiger Form eingefüllt wird, der dann aushärtet und dabei vernetzt. Aufgrund der geringen Viskosität dringt das noch flüssige Gießharz in den Zwickelbereich zwischen den Kabeladern ein und dichtet diesen gegenüber sich in Längsrichtung des Kabels ausbreitendes Wasser ab. Diese Technik hat sich bereits über einen langen Zeitraum bewährt. Nachteilig ist jedoch, daß die Kabeladern werksseitig präpariert werden müssen, damit das erstarrte Gießharz mit der Isolierschicht der Kabeladern dauerhaft verbunden bleibt. Überschüssiges Gießharz muß entsorgt werden. Eine Reparatur der Muffe ist nicht möglich. Bei einer fehlerhaften Montage muß das Gehäuse zerstört und das ausgehärtete Gießharz entfernt werden.

Der vorliegenden Erfindung liegt die Aufgabe zugrunde, die bekannte Muffe dahingehend zu verbessern, daß die Abdichtung des Zwickelbereiches zwischen den Kabeladern ohne Gießharz vorgenommen wird und damit wesentlich umweltfreundlicher gearbeitet wird. Darüberhinaus soll eine sicherere dauerhafte Abdichtung erreicht werden.

Diese Aufgabe wird dadurch gelöst, daß beiderseits der Abzweigklemme zwischen den Kabeladern und der aufgeschrumpften Manschette T-förmige Metallteile in einer Anzahl vorgesehen sind, die der Anzahl der Kabeladern entspricht, daß jeweils ein T-Steg der Metallteile zwischen zwei benachbarten Kabeladern angeordnet ist und die T-Arme je auf einer der Kabeladern aufliegen und daß die den Kabeladern zugekehrte Oberfläche der Metallteile mit einer Schicht aus einem Heißschmelzkleber versehen ist.

Der Heißschmelzkleber verbindet sich nach seiner Wärmeaktivierung mit der Oberfläche der Kabeladern. Überschüssiger Heißschmelzkleber verläuft in den Zwickelbereich zwischen den Kabeladern. Die Metallteile haben bei dieser Lösung den Vorteil, daß die für die Aktivierung des Heißschmelzklebers benötigte Wärme durch Wärmeleitung bis nahezu in den Zwickelbereich transportiert wird. Dadurch ist gewährleistet, daß der Heißschmelzkleber den Zwickelbereich sicher abdichtet. Der Heißschmelzkleber sollte so beschaffen sein, daß er während des Abdichtvorganges eine relativ geringe Viskosität bei Verarbeitungstemperatur (ca. 100°C) aufweist, nach der Verarbeitung jedoch eine höhere Viskosität bei Temperaturen in der Nähe von 100° aufweist. Es ist deshalb von Vorteil, einen vernetzbaren Heißschmelzkleber zu verwenden, der nach der Verarbeitung vernetzt.

Der T-Steg sollte soweit wie möglich in den Zwickelbereich eindringen. Da die Kabeladern vor dem Aufsetzen der Klemmenhälften üblicherweise voneinander gespreizt werden, lassen sich die T-Stege der Metallteile gut in die Spalte zwischen den Kabeladern einführen. Die auf den Kabeladern aufliegenden T-Arme der Metallteile dienen dazu, die Metallteile zu fixieren und die für die Aktivierung des Klebers erforderliche Wärme aufzunehmen. Die Wärme wird üblicherweise mit einem Gasbrenner erzeugt. Die T-Arme schützen dabei die Kabeladerisolierung vor einer Beschädigung durch die Flamme.

In ihrer einfachsten Form lassen sich die Metallteile aus dünnem Metallblech, vorzugsweise Aluminiumblech, formen. Eine hohe Eigensteifigkeit ist nicht erforderlich, da die Heißschmelzkleberschicht zur Stabilität der Metallteile erheblich beiträgt.

Die T-Arme sind der Oberfläche der Kabeladern angepaßt und sind zweckmäßigerweise kreisbogenförmig ausgebildet. Sie überdecken einen Winkel von nahezu 45° bei einem Vierleiterkabel. Bei einem Dreileiterkabel wird ein Winkel von ca. 60° bevorzugt.

Die Metallteile erstrecken sich in Längsrichtung des Kabels über eine Länge von mindestens 5 mm, vorzugsweise von 25 - 50 mm. Dadurch wird ausreichend Heißschmelzkleber in die Spalte und den Zwickelbereich zwischen den Kabeladern zum Zwecke der Abdichtung eingebracht.

Insbesondere, wenn die Kabeladern im Bereich der Abzweigklemme besonders stark auseinandergespreizt sind, ist es von Vorteil, wenn sowohl die Höhe der T-Stege als auch die Breite der T-Arme der Metallteile zu dem der Abzweigklemme abgekehrten Ende abnehmen.

Bei einem geringen Auseinanderspreizen der Kabeladern kann es von Vorteil sein, daß alle auf einer Seite der Abzweigklemme befindlichen Metallteile miteinander verbunden, vorzugsweise aus einem einzigen Blechstreifen geformt sind.

Die Metallteile sind zweckmäßigerweise aus Aluminiumblech mit einer Wanddicke von 0,05 bis 5 mm geformt.

Wegen der guten Leitfähigkeit von Aluminium und seiner Festigkeit sind solche Wanddicken vollkommen ausreichend. Bleche von so geringer Wanddicke lassen sich sehr leicht verformen. Die Wanddicke des Heißschmelzklebers richtet sich nach dem Bedarf, jedoch ist eine Wanddicke von 0,1 bis 3 mm ausreichend.

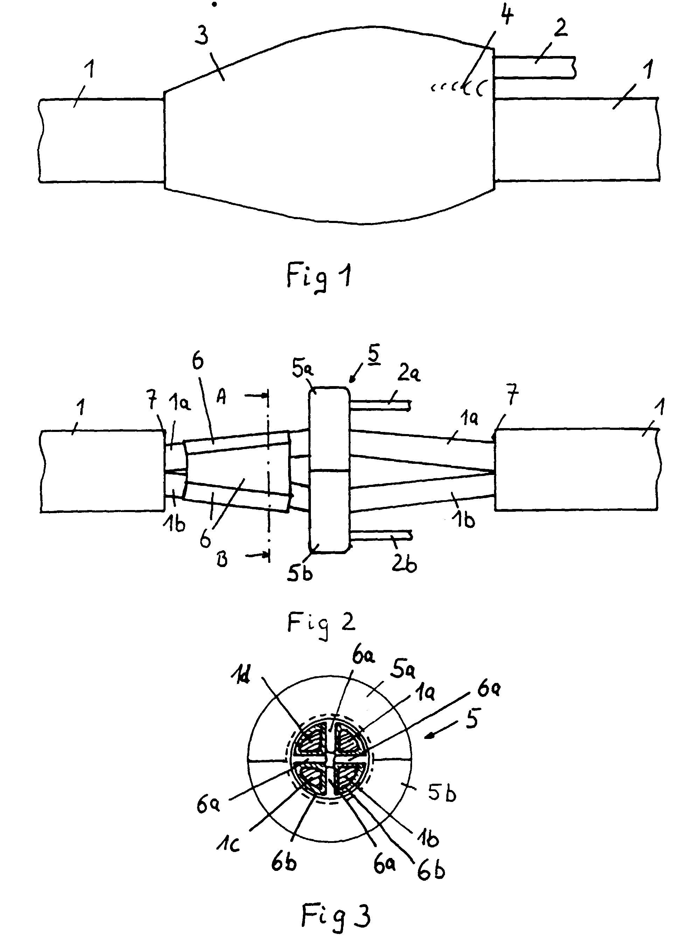

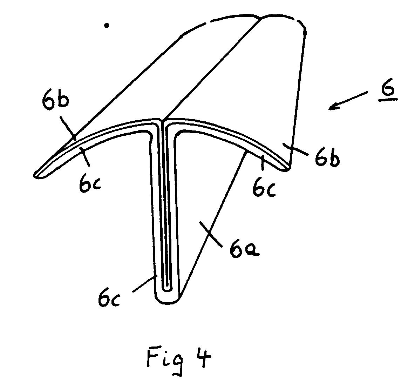

Die Erfindung ist anhand der in den Figuren 1 bis 4 schematisch dargestellten Ausführungsbeispiele näher erläutert.

In der Figur 1 ist eine fertige Muffe in der Ansicht dargestellt. Mit 1 ist das Niederspannungskabel, beispielsweise ein vieradriges Kabel bezeichnet, von dem das Abzweigkabel 2, welches ebenfalls ein vieradriges Kabel ist, abgezweigt ist. Die Abzweigstelle ist durch eine an sich bekannte Schrumpfmanschette 3 überdeckt, die auf den Mantel des Kabels 1 aufgeschrumpft ist. Die Schrumpfmanschette ist, wie aus der DE-PS 1 525 815 bekannt, um die Abzweigstelle herumgelegt und an ihren Längskanten durch eine nicht dargestellte Schiene geschlossen. Beim Schrumpfvorgang wird der an der inneren Oberfläche der Manschette 3 befindliche Heißschmelzkleber flüssig, verläuft und dichtet dabei die Abzweigverbindung nach außen hin ab. Der zwischen dem Abzweigkabel und dem Kabel 1 befindliche Zwickel wird wie bei 4 angedeutet, durch Zusammenpressen der gegenüberliegenden Wandungsbereiche der Manschette 3 beim oder nach dem Schrumpfen abgedichtet. Es ist auch möglich eine Klammer vor dem Schrumpfen über den Bereich 4 zu schieben. Diese Vorgehensweise ist an sich aus der DE-OS 2 543 338 bekannt.

Wie aus der Figur 2 ersichtlich, wird der nicht näher bezeichnete Mantel des Kabels über eine bestimmte Länge (ca. 100 mm) entfernt, die Adern 1a, 1b, 1c und 1d auseinandergespreizt und eine aus den Hälften 5a und 5b bestehende Abzweigklemme 5 auf die Adern 1a bis 1d aufgesetzt und die Hälften 5a und 5b miteinander verbunden. Beim Verbindungsvorgang durchdringen nicht dargestellte Kontaktkrallen die Kabeladerisolierung. Die Adern des Abzweigkabels 2, von denen nur die Adern 2a und 2b dargestellt sind, sind mit ihrem abisolierten Ende in einer nicht dargestellten Bohrung in der Abzweigklemme 5 mittels Madenschrauben festgelegt und mit den Kontaktkrallen kontaktiert.

Nach diesen vorbereiteten Arbeiten werden beiderseits der Abzweigklemme T-förmige Metallteile 6 so auf den Bereich zwischen dem Ende des Mantels (S. 7) und der Abzweigklemme 5 angeordnet, daß der T-Steg 6a in den Spalt zwischen den Kabeladern 1a bis 1d eindringt und die T-Arme 6b auf den Kabeladern 1a bis 1d diese überdeckend aufliegen (s. Figur 3).

Die Figur 4 zeigt das T-förmige Metallteil 6 in der Ansicht. Das Teil 6 ist aus Aluminiumblech geformt, wobei der T-Steg 6a doppelwandig ausgebildet ist. Die leicht gewölbten T-Arme 6b erstrecken sich jeder über einen Winkel von 45°. Bei einem Dreileiterkabel werden 60° bevorzugt. Sowohl die T-Arme 6b als auch der Steg 6a sind so ausgestaltet, daß ihre Breite bzw. seine Höhe von einem zum anderen Ende hin abnehmen. Der T-Steg 6a sowie die dem T-Steg 6a zugewandte Oberfläche der T-Arme 6b sind mit einem Heißschmelzkleber 6c beschichtet. Bei dem Heißschmelzkleber 6c handelt es sich um einen Kleber, der beim Erstarren bzw. danach vernetzt bzw. aushärtet.

Die Metallteile 6 werden wie oben beschrieben, beiderseits der Abzweigklemme 5 in die zwischen den Kabeladern 1a bis 1d befindlichen Spalte eingeschoben, wobei die T-Arme 6b auf den Kabeladern 1a bis 1d aufliegen. Über diese Anordnung wird eine Aluminiumfolie gewickelt. Nun wird mit einer weichen Flamme die Aluminiumfolie und damit die nach außen weisende metallische Oberfläche der T-Arme 6b erwärmt, bis der Heißschmelzkleber 6c verläuft, d.h. flüssig wird. Dann wird die Manschette 3 herumgelegt und mit einer weichen Flamme zum Schrumpfen gebracht. Dabei werden die T-Stege 6a durch die Schrumpfkraft der Manschette um die Wanddicke der Kleberschicht 6c an den T-Armen 6b nach innen gepreßt und verdrängen den noch flüssigen Kleber in den Zwickelbereich zwischen den Kabeladern 1a bis 1d.

Unter Umständen kann auch auf eine Erwärmung der Metallteile 6 mit einer Flamme verzichtet werden, denn üblicherweise reicht die Wärmezufuhr beim Schrumpfen der Manschette 3 aus, auch den Steg 6a bis auf die Schmelztemperatur des Klebers 6c zu erwärmen. Der geschilderte Verdrängungsprozeß geschieht dann in der Anwärmphase.

Bei der Abdichtung des Zwickelbereiches bzw. der Spalte zwischen den Adern 1a bis 1b kommt es nicht darauf an, daß der gesamte abgemantelte Bereich mit Kleber ausgefüllt ist. Um eine Längsausbreitung von Wasser im Kabelinnern zu unterbinden, ist es lediglich erforderlich, daß in einem begrenzten Bereich der freie Querschnitt vollständig mit Heißschmelzkleber dauerhaft ausgefüllt ist.

## Patentansprüche

1. Abzweigmuffe für Niederspannungskabel mit einer Abzweigklemme (5) aus Metall, die aus zwei Klemmenhälften (5a, 5b) besteht, die z.B. mit Schraubbolzen zu der Abzweigklemme zusammenfügbar sind, wobei beim Zusammenfügen die Isolierung der Kabeladern (1a-d) von Kontaktkrallen durchdrungen wird, sowie einer die Abzweigklemme (5) einhüllenden auf dem Mantel des Kabels beiderseits der Abzweigklemme aufgeschrumpften Manschette (3) aus Kunststoff, dadurch gekennzeichnet, daß beiderseits der Abzweigklemme (5) zwischen den Kabeladern (1a,1b,1c,1d) und der aufgeschrumpften Manschette (3) T-förmige Metallteile (6) in einer Anzahl vorgesehen sind, die der Anzahl der Kabeladern entspricht, daß jeweils ein T-Steg (6a) der Metallteile (6) zwischen zwei benachbarten Kabeladern angeordnet ist, und die T-Arme (6b) je auf einer der Kabeladern aufliegen und daß die den Kabeladern (1a,1b,1c,1d) zugekehrte Oberfläche der Metallteile (6) mit einer Schicht aus einem Heißschmelzkleber versehen ist.

2. Abzweigmuffe nach Anspruch 1, dadurch gekennzeichnet, daß die T-förmigen Metallteile (6) aus dünnem Metallblech vorzugsweise aus Aluminiumblech geformt sind.

3. Abzweigmuffe nach Anspruch 1 oder 2, dadurch gekennzeichnet, daß die auf den Kabeladern (1a,1b,1c,1d) aufliegenden T-Arme (6b) der Oberfläche der Kabeladern (1a,1b,1c,1d) angepaßt sind.

4. Abzweigmuffe nach einem der Ansprüche 1 bis 3, dadurch gekennzeichnet, daß jeder der T-Arme (6b) kreisbogenförmig ausgebildet ist und einen Winkel von nahezu 45° bzw. 60° überdeckt.

5. Abzweigmuffe nach einem der Ansprüche 1 bis 4, dadurch gekennzeichnet, daß sich die Metallteile (6) in Richtung der Kabellängsachse über eine Länge von mindestens 5 mm, vorzugsweise 25 - 50 mm, erstrecken.

6. Abzweigmuffe nach einem der Ansprüche 1 bis 5, dadurch gekennzeichnet, daß sowohl die Höhe der T-Stege (6a) als auch die Breite der T-Arme (6b) der Metallteile (6) zu dem der Abzweigklemme (5) abgekehrten Ende abnehmen.

7. Abzweigmuffe nach einem der Ansprüche 1 bis 6, dadurch gekennzeichnet, daß die Metallteile (6) aus einem Aluminiumblech mit einer Wanddicke von 0,05 bis 5 mm geformt ist.

8. Abzweigmuffe nach einem der Ansprüche 1 bis 7, dadurch gekennzeichnet, daß die Wanddicke der Heißschmelzkleberschicht (6c) 0,1 - 3 mm beträgt.

## Claims

1. Branching sleeve for low-voltage cables having a branching clamp (5) made of metal, which consists of two clamp halves (5a, 5b), which can be joined, for example using bolts, to form the branching clamp, the insulation of the cable ways (la-d) being penetrated by contact claws during the joining, as well as having a collar (3) which is made of plastic, encloses the branching clamp (5) and is shrunk onto the sheath of the cable on both sides of the branching clamp (5), characterized in that, on both sides of the branching clamp (5), between the cable ways (1a,1b,1c,1d) and the shrunk-on collar (3), T-shaped metal parts (6) are provided, the number of which corresponds to the number of cable ways, in that in each case a stem of the T (6a) of the metal parts (6) is arranged between two adjacent cable ways, and the arms of the T (6b) each rest on one of the cable ways, and in that the surface of the metal parts (6) which faces the cable ways (la,lb,lc,ld) is provided with a layer made of a hot-melt adhesive.

2. Branching sleeve according to Claim 1, characterized in that the T-shaped metal parts (6) are shaped from thin metal sheet, preferably from aluminium sheet.

3. Branching sleeve according to Claim 1 or 2, characterized in that the arms of the T (6b) which rest on the cable ways (1a,1b,1c,1d) are matched to the surface of the cable ways (1a,1b,1c,1d).

4. Branching sleeve according to one of Claims 1 to 3, characterized in that each of the arms of the T (6b) is of circular arc-shaped design and covers an angle of virtually 45° or 60°.

5. Branching sleeve according to one of Claims 1 to 4, characterized in that the metal parts (6) extend over a length of at least 5 mm, preferably 25 - 50 mm, in the direction of the cable longitudinal axis.

6. Branching sleeve according to one cf Claims 1 to 5, characterized in that both the height of the stem of the T (6a) and the width of the arms of the T (6b) of the metal parts (6) decrease towards the end remote from the branching clamp (5).

7. Branching sleeve according to one of Claims 1 to 6, characterized in that the metal parts (6) are shaped from an aluminium sheet having a wall thickness of 0.05 to 5 mm.

8. Branching sleeve according to one of Claims 1 to 7, characterized in that the wall thickness of the hot-melt adhesive layer (6c) is 0.1 - 3 mm.

## Revendications

1. Manchon de branchement pour câble basse tension comportant une borne de dérivation (5) en métal, constituée de deux moitiés de bornes (5a, 5b) pouvant être assemblées à la borne de dérivation, par exemple à l'aide de boulons filetés, l'isolation des conducteurs de câbles (la-d) étant traversée lors de l'assemblage par des crampons de contact, et comportant une manchette en matière plastique enveloppant la borne de dérivation (5) frettée sur la gaine du câble des deux côtés de la borne de dérivation (5), caractérisé en ce que des deux côtés de la borne de dérivation (5), entre les conducteurs de câbles (1a, 1b, 1c, 1d) et la manchette frettée (3) des pièces métalliques (6) en forme de T sont prévues en un nombre correspondant au nombre de conducteurs de câbles, en ce qu'est disposé chaque fois entre deux conducteurs de câbles adjacents une barrette en forme de T (6a) des pièces métalliques (6) et que les bras en forme de T (6b) reposent chacun sur un des concducteurs de câbles, et en ce que la surface des pièces métalliques (6) opposée aux conducteurs de câbles (1a, 1b, 1c, 1d) est revêtue d'une couche d'un adhésif à chaud.

2. Manchon de branchement selon la revendication 1, caractérisé en ce que les pièces métalliques (6) en forme de T (6b) sont constituées d'une fine tôle métallique, de préférence d'une tôle d'aluminium.

3. Manchon de branchement selon la revendication 1 ou 2, caractérisé en ce que sur les bras en forme de T reposant sur les conducteurs de câbles (1a, 1b, 1c, 1d) sont adaptés à la surface des conducteurs de câbles (1a, 1b, 1c, 1d).

4. Manchon de branchement selon les revendications 1 à 3, caractérisé en ce que chacun des bras en forme de T (6b) est configuré en arc de cercle et couvre un angle de presque 45° ou 60°.

5. Manchon de branchement selon l'une des revendications 1 à 4, caractérisé en ce que les pièces métalliques (6) s'étendent dans le sens de l'axe longitudinal des câbles sur une longueur d'au moins 5 mm, de préférence 25 à 50 mm.

6. Manchon de branchement selon l'une des revendications 1 à 5, caractérisé en ce qu'aussi bien la hauteur des barrettes en forme de T (6a) que la largeur des bras en forme de T (6b) des pièces métalliques (6) diminuent vers l'extrémité opposée au manchon de branchement (5).

7. Manchon de branchement selon l'une des revendications 1 à 6, caractérisé en ce que les pièces métalliques (6) sont constituées d'une tôle d'aluminium ayant une épaisseur de paroi de 0,05 à 5 mm.

8. Manchon de branchement selon l'une des revendications 1 à 7, caractérisé en ce que l'épaisseur de paroi de la couche d'adhésif à chaud (6c) est de 0,1 à 3 mm.
